Europäisches Patentamt

European Patent Office

Office européen des brevets

(19)

(11) Veröffentlichungsnummer : **0 238 856 B1**

## (12) EUROPÄISCHE PATENTSCHRIFT

(45) Veröffentlichungstag der Patentschrift :
**05.06.91 Patentblatt 91/23**

(51) Int. Cl.$^5$ : **G01K 11/20**, G01D 5/246

(21) Anmeldenummer : **87102428.7**

(22) Anmeldetag : **20.02.87**

(54) **Verfahren und Vorrichtung zur Messung der Fluoreszenz-Abklingdauer einer fluoreszierenden Substanz.**

Teilanmeldung 87102428.7 eingereicht am 20/02/87.

(30) Priorität : **21.02.86 DE 3605598**
**06.10.86 DE 3634045**

(43) Veröffentlichungstag der Anmeldung :
**30.09.87 Patentblatt 87/40**

(45) Bekanntmachung des Hinweises auf die Patenterteilung :
**05.06.91 Patentblatt 91/23**

(84) Benannte Vertragsstaaten :
**DE FR GB IT NL SE**

(56) Entgegenhaltungen :
**EP-A- 0 091 394**
**EP-A- 0 095 673**
**EP-A- 0 174 506**
**WO-A-86/03293**
**PATENT ABSTRACTS OF JAPAN, Band 6, Nr. 265 (P-165)[1143], 24. Dezember 1982; & JP-A-57 160 013 (TATEISHI DENKI K.K.) 02-10-1982**

(61) Veröffentlichungsnummer der früheren Anmeldung nach Art. 76 EPü : **0238856**

(73) Patentinhaber : **Degussa Aktiengesellschaft**
**Weissfrauenstrasse 9**
**W-6000 Frankfurt am Main 1 (DE)**

(72) Erfinder : **Fehrenbach, Gustav W.,Dr.**
**Dipl.-Phys.**
**Grünaustrasse 19**
**W-6450 Hanau (DE)**
Erfinder : **Schäfer, Wolfgang, Dr.Dipl.-Phys.**
**Ludwig-Uhland-Strasse 10**
**W-6451 Grosskrotzenburg (DE)**

(74) Vertreter : **Stoffregen, Hans-Herbert, Dr.**
**Dipl.-Phys. et al**
**Patentanwälte Strasse & Stoffregen**
**Salzstrasse 11a Postfach 2144**
**W-6450 Hanau/Main 1 (DE)**

EP 0 238 856 B1

## Beschreibung

Die Erfindung bezieht sich auf ein Verfahren und auf Vorrichtungen zur Messung der Fluoreszenz-Abklingdauer einer fluoreszierenden Substanz, deren Fluoreszenz-Abklingdauer von mindestens einer physikalischen Größe abhängt, indem die Substanz einer mit einer elektrischen Schwingung erzeugten Strahlung ausgesetzt wird, die eine Fluoreszenzstrahlung hervorruft, die einem photoelektrischen Empfänger zugeführt wird, an dessen Ausgangssignal positive und negative Abschnitte gegenüber Bezugspotential phasenempfindlich ausgewählt und integriert werden, wobei das Integral der Abschnitte in einem Regelkreis die Regelgröße, die ein Maß für die physikalische Größe ist, im Sinne einer Reduzierung seines Werts auf null oder nahezu null beeinflußt.

Ein Verfahren und eine Vorrichtung dieser Gattung sind in Verbindung mit einem faseroptischen Temperaturmesser bekannt (s. z.B. Th. Bosselmann, A. Reule, J. Schröder : "Fiber-Optic Temperature Sensor using fluorescence Decay Time" in 2nd International Conference on Optical Fiber Sensors, Stuttgart, 1984, VDE-Verlag GmbH, Berlin, Offenbach, S. 151 bis 154. Der faseroptische Temperaturmesser enthält eine lumineszierende Substanz, die Teil eines selbstoszillierenden Systems ist, dessen Schwingungsdauer $\Delta$ T im eingeschwungenen Zustand proportional zu der Lumineszmnz-Relaxationszeit $\tau$ ist, solange die Signallaufzeit innerhalb dem Auswertungselektronik gegenüber der Relaxationszeit $\tau$ vernachlässigt werden kann. Dabei bestimmt ein Photodiodensignal, das phasenempfindlich gleichgerichtet und aufintegriert wird, die Frequenz eines frequenzbestimmenden Stellgliedes, eines spannungskontrollierten Oszillators (VCO), so daß die Frequenz eine eindeutige Funktion der Lumineszenz-Relaxationszeit ist.

Es ist auch ein optisches System zum Messen einer physikalischen Größe mit einer Strahlungsquelle, einem von der Strahlung zur Aussendung von Fluoreszenzstrahlung angeregten Verbundkörper und Mitteln zum Erfassen und Messen von Änderungen der Fluoreszenzstrahlung bekannt (EP-B-0 029 653). Die auf den Verbundkörper gerichtete Strahlung wird moduliert. Die Phasenverschiebung zwischen der auf den Verbundkörper gerichteten Strahlung und der mit einem photoelektrischen Detektor gemessenen Fluoreszenzstrahlung wird gemessen. Aus der Phasenverschiebung wird die physikalische Größe bestimmt.

Bekannt ist auch ein faseroptischer Temperatursensor, bei dem die fluoreszierende Strahlung von einem sinusförmig modulierten Strahler angeregt wird. Das aus dem zeitlich verzögerten Fluoreszenzlicht gewonnene Signal wird über ein Zeitglied auf die Steuerung des Modulators rückgekoppelt. Die sich in dem selbsterregten Schwingkreis einstellende Frequenz ist abhängig von der Fluoreszenz-Abklingdauer und damit von allen physikalischen Größen, die diese beeinflussen (DE-05 32 02 089). Der eingangs beschriebene faseroptische Temperatursensor hat gegenüber dem zuletzt erläuterten Temperatursensor den Vorteil, daß nur ein geringes Rauschen auftritt und daß die Empfindlichkeit und die Genauigkeit verbessert werden.

Wenn das Ausgangssignal des photoelektrischen Empfängers während der Anregungsphase und der Abklingphase der Fluoreszenzstrahlung integriert wird, sind Maßnahmen zur Unterdrückung des Übersprechens der Anregungsquelle und zur Kontrolle des zeitlichen Verlaufs der Anregung notwendig. Es müssen optische Filter und elektronische Streulichtkompensationsmaßnahmen eingesetzt werden. Weiterhin muß die von der lumineszierenden Substanz absorbierte Leistung geregelt werden. Durch eine erhebliche Störanfälligkeit dieser Maßnahmen gegen das Übersprechen des Anregunskanals erweist sich sogar der Einsatz von Lichtwellenleiter-Steckverbindungen aufgrund der in ihnen auftretenden Reflexionen als problematisch. Darüber hinaus ist eine resonante Anregung, bei der der Anregungswellenlängenbereich mit dem Lumineszenzwellenlängenbereich weitgehend übereinstimmt, praktisch nicht möglich, da eine Unterdrückung des Streulichts durch optische Filter in diesem Fall nicht mehr durchgeführt werden kann.

Der Erfindung liegt die Aufgabe zugrunde, ein Verfahren der eingangs beschriebenen Gattung zur Messung der physikalischen Größe derart weiterzuentwickeln, daß die Beeinträchtigung der Meßgenauigkeit durch Übersprechen eines Anregungskanals, durch DC-Driften und durch zeitliche sich langsam verändernde Verluste auf einer Übertragungsstrecke beseitigt wird.

Die Aufgabe wird erfindungsgemäß dadurch gelöst, daß aus dem durch die Fluoreszenzstrahlung nur in deren Abklingphase erhaltenen Ausgangssignal des Empfängers durch phasenempfindliche alternierende Polaritätswendung die positiven und negativen Abschnitte erzeugt werden, daß die Abschnitte der verschiedenen Polaritäten unterschiedlich lang sind, daß die Gesamtzeiten der Abschnitte der verschiedenen Polaritäten gleich sind und daß die Regelgröße die Frequenz der Schwingung oder die relative Dauer mindestens zweier Abschnitte der verschiedenen Polaritäten bei gleichbleibender oder nahezu gleichbleibender Frequenz ist.

Die im Stand der Technik vorhandenen Schwierigkeiten werden vermieden, wenn das Ausgangssignal des photoelektrischen Empfängers lediglich außerhalb der Anregungsphasen der Fluoreszenzstrahlung phasenempfindlich in seiner Polarität gewendet und integriert wird. Das Verfahren gemäß dem Anspruch 1 ist somit übersprechneutral. Der zur Beseitigung des Einflusses des Übersprechens notwendige Aufwand wird stark reduziert. Ein besonderer Vorteil ist noch darin zu sehen, daß auch zeitlich sich langsam verändernde Verluste

EP 0 238 856 B1

auf einer Lichtwellenleiter-Übertragungsstrecke beseitigt werden.

Bei einer bevorzugten Ausführungsform sind in jeder Abklingphase zwei Abschnitte der einen Polarität beiderseits eines Abschnitts der anderen Polarität vorgesehen. Die Zahl der erforderlichen Polaritätsänderungen ist hierbei sehr klein. Der Einfluß der DC-Driftung auf die Meßgenauigkeit wird mit den oben beschriebenen Verfahren beseitigt. Die Verfahren zeigen nicht nur bei einfach exponentiellem Abklingen in der Abklingphase die oben angegebenen Vorteile. Auch bei komplizierteren Zeitabläufen sind die Vorteile erreichbar, wenn die Anzahl und Dauer der Abschnitte der Polaritätswendung an den jeweils typischen Ablauf angepaßt wird. Eine streng monotone Abnahme des Abklingsignals sollte vorhanden sein.

Vorzugsweise wird innerhalb einer Periode der Schwingung nach einer Anregungsphase und nach den Abschnitten der Polaritätswendung jeweils eine Pausenzeit ohne Polaritätswendung eingefügt. Mit dieser Maßnahme lassen sich die Einflüsse der endlichen Anstiegszeit von Vorverstärkern auf das Meßergebnis unterdrücken.

Bei einer besonders zweckmäßigen Ausführungsform werden Taktimpulse von gleichbleibender oder nahezu gleichbleibender Frequenz während einer Periode der Schwingung gezählt und mit vorgegebenen Werten für die Anregungsphase und die Abschnitte der Polaritätswendung zur Erzeugung von Steuersignalen verglichen, wobei die Zeitdauern der Abschnitte der Polaritätswendung in Abhängigkeit vom positiven oder negativen Ergebnis der Integration verkleinert oder vergrößert und ausgegeben werden. Der Zeitpunkt, zu dem die Polarität umgekehrt wird, ist eine eindeutige Funktion der Relaxationszeit. Bei bekanntem Zusammenhang zwischen der Abklingzeit und dem zu messenden physikalischen Parameter kann dieser leicht bestimmt werden.

Eine Vorrichtung zur Durchführung der in einem der Ansprüche 1 bis 5 beschriebenen Verfahren besteht erfindungsgemäß darin, daß diese Ausgangssignale des photoelektrischen Empfängers invertiert und nichtinvertiert jeweils über zwei Schalter abwechselnd an den invertierenden oder nichtinvertierenden Eingang eines Differenzverstärkers anlegbar sind, dessen beide Eingänge während der Anregungsphasen an gleiches Bezugspotential gelegt sind und dessen Ausgang mit einem Integrator verbunden ist, und daß dem Integrator eine von einer Logikschaltung für die Schalterbetätigung steuerbare Abtast- und Halteschaltung nachgeschaltet ist, an die der Steuereingang eines spannungsgesteuerten Oszillators für die Erzeugung der elektrischen Schwingung angeschlossen ist oder daß dem Integrator ein Diskriminator nachgeschaltet ist, an den eine Logikschaltung angeschlossen ist, die einen Zähler enthält, dessen Zähleingang mit Taktimpulsen gleichbleibender Frequenz beaufschlagbar ist und dessen Inhalt zur Erzeugung von Steuersignalen für die Schalter mit vorgebbaren Werten vergleichbar ist. Diese Vorrichtung hat einen sehr einfachen schaltungstechnischen Aufbau. Damit ergeben sich besondere Vorteile in Verbindung mit der Auswerteelektronik eines faseroptischen Temperatursensors, bei dem eine fluoreszierende Substanz optisch über einen Lichtwellenleiter angeregt wird, deren Lumineszenz-Relaxationszeit eine starke Temperaturabhängigkeit aufweist. Die zu bestimmende Relaxationszeit ist dann ein Maß für die Temperatur der fluoreszierenden Substanz. Der Zählerinhalt, bei dem die Gleichrichtung geändert wird, hängt von der Abklingzeit und der geforderten Auflösung ab.

Besonders vorteilhaft ist die Anwendung der erfindungsgemäßen Lehre für faseroptische Temperatursensoren. Der Einsatz der Erfindung ist jedoch nicht auf diese spezielle Anwendung beschränkt.

Das Ausgangssignal des photoelektrischen Empfängers wird zweckmäßigerweise über einen Vorverstärker einem invertierenden und einem nichtinvertierenden Verstärker zugeführt, deren Ausgängen je zwei Schalter nachgeschaltet sind, von denen jeweils der eine an den invertierenden und der andere an den nichtinvertierenden Eingang des Differenzverstärkers angeschlossen ist, dessen Eingänge weiterhin je über einen Schalter mit Massepotential verbindbar sind.

Als fluoreszierende Substanz zur Temperaturmessung werden vorzugsweise Kristalle verwendet, die mit den isoelektronischen Störstellen $V^{2+}$, $Cr^{3+}$ oder $Mn^{4+}$ dotiert sind. Besonders zweckmäßig ist die Verwendung von Sensorkristallen aus $Cr^{3+}$ : $Y_3Al_5O_{12}$ und $Cr^{3+}$ : $Al_2O_3$. Durch die kombinierte Dotierung mit dreiwertigen Ionen aus der Gruppe der Seltenen Erden ist es möglich, aufgrund des Energietransfers zwischen den unterschiedlichen Seltenen-Erden-Ionen (z.B. $Nd^{3+}$ und $Yb^{3+}$) eine stark temperaturabhängige Lumineszenzabklingzeit zu erreichen, obwohl die Abklingzeit der einzelnen, isolierten Seltenen-Erden-Ionen keine ausgeprägte Temperaturabhängigkeit zeigt.

Weitere Einzelheiten, Merkmale und Vorteile der Erfindung ergeben sich nicht nur aus den Ansprüchen, den diesen zu entnehmenden Merkmalen -für sich und/oder in Kombination-, sondern auch aus der nachfolgenden Beschreibung von zeichnerisch dargestellten Ausführungsbeispielen.

Es zeigen :

Fig. 1 ein Übersichtsschaltbild einer Vorrichtung zur Messung der Fluoreszenz-Abklingzeit einer fluoreszierenden Substanz,

Fig. 2 ein Zeitdiagramm der am Ausgang eines photoelektrischen Empfängers der Vorrichtung gemäß Fig. 1 auftretenden Signale,

Fig. 3 ein Zeitdiagramm der am Ausgang einer phasenempfindlichen Anordnung zur Polaritätswendung gemäß Fig. 1 auftretenden Signale,

Fig. 4 den Schaltungsaufbau einer Anordnung zum phasenempfindlichen Polaritätswenden,

Fig. 5 ein Zeitdiagramm von Steuersignalen für Schalter in der Anordnung gemäß Fig. 4,

Fig. 6 ein Schaltbild einer anderen Ausführungsform einer Vorrichtung zur Messung der Fluoreszenz-Abklingzeit einer fluoreszierenden Substanz und

Fig. 7 ein Zeitdiagramm von Steuersignalen für Schalter gemäß der in Fig. 6 dargestellten Vorrichtung und

Fig. 8a bis 8d Zeitdiagramme der Integratorausgangssignale für verschiedene Lumineszenz-Relaxationszeiten je für die in Fig. 1 und 6 dargestellten Anordnungen.

Bei einfach exponentiellen Relaxationsvorgängen, läßt sich der zeitliche Intensitätsverlauf nach der Anregung durch die Gleichung

$$I(t) = I_0 e^{-t/\tau}$$

beschreiben, worin $I$ die Intensität der Strahlung, $I_0$ die Anfangsintensität und $\tau$ die Lumineszenz-Relaxationszeit sind.

Eine Unterdrückung des DC-Driftens ist mit einer phasenempfindlichen Polaritätswendung mit symmetrischen Zeitintervallen $\Delta T$ nicht möglich, wie sich aus der folgenden Ungleichung ergibt:

$$\int_{T_1}^{T_1+\Delta T} I_0 \cdot e^{-t/\tau} \, dt - \int_{T_1+\Delta T}^{T_1+2\Delta T} I_0 \, e^{-t/\tau} \, dt > 0 \; ; \quad T_1 > 0 \; ; \quad \Delta T > 0 \; ;$$

Eine überraschend einfache Möglichkeit zur Beseitigung des Einflusses des Übersprechens und des Einflusses von DC-Driftvorgängen stellt die modifizierte, alternierende, phasenempflindliche Polaritätswendung nach folgender Beziehung dar:

$$\int_{T_1}^{T_2} I_0 \cdot e^{-t/\tau} \, dt - \int_{T_2}^{T_3} I_0 \, e^{-t/\tau} \, dt + \int_{T_3}^{T_4} I_0 \, e^{-t/\tau} \, dt = 0$$

wenn zwischen $T_1$, $T_2$, $T_3$, $T_4$ und $\Delta T$ folgender Zusammenhang besteht:

$$T_2 = T_1 + n_1 \Delta T \; ;$$
$$T_3 = T_2 + n_2 \Delta T \; ;$$
$$T_4 + T_3 + n_3 \Delta T \; ;$$

mit

$$n_1 + n_3 = n_2.$$

$n_1$, $n_2$ und $n_3$ sind Faktoren, um die sich die jeweiligen Zeitabschnitte als Vielfaches des Zeitintervalls $\Delta T$ unterscheiden. Es wird also phasenempfindlich in der Abklingphase der Fluoreszenzstrahlung abwechselnd die Polarität gewendet. Es ergeben sich Abschnitte $n_1 \Delta T$ und $n_3 \Delta T$ in der einen und $n_2 \Delta T$ in der anderen Polarität. Die Gesamtzeiten der Abschnitte der beiden Polaritäten müssen jeweils gleich sein.

Beispielsweise erhält man für

$$n_1 = 1 \; ;$$
$$n_2 = 3 \; ;$$
$$n_3 = 2 \; ;$$

im eingeschwungenen Zustand die dann mit dem Zeitintervall $\Delta T$ übereinstimmende Schwingungsdauer durch die Gleichung:

EP 0 238 856 B1

$$T = -1n(1/2(\sqrt{5} - 1)) - \tau \approx 0,481 \cdot \tau.$$

Es sind auch andere Kombinationen $n_1$, $n_2$ und $n_3$ unter Einhaltung der Bedingung $n_1 + n_2 = n_3$ möglich. Für streng monoton abklingende Signale sind die Tastverhältnisse $n_1 : n_2 : n_3$ entsprechend anzupassen.

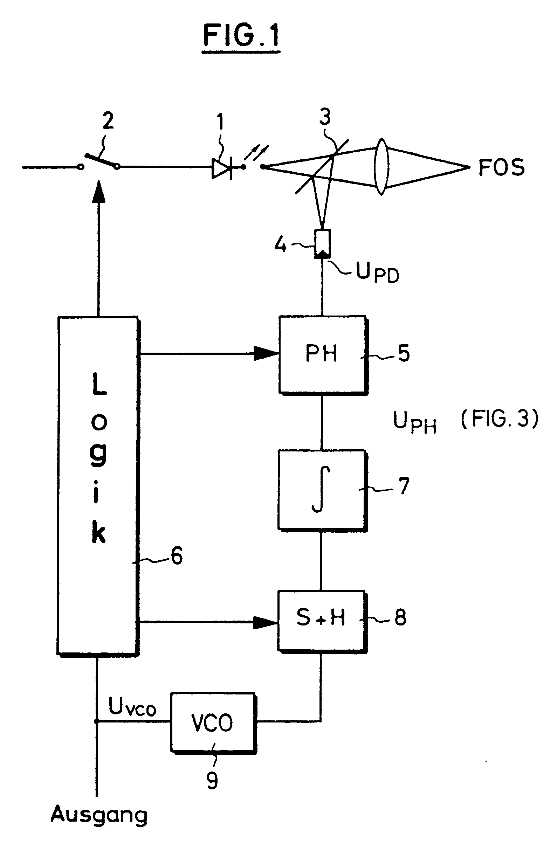

Fig. 1 zeigt beispielhaft den Prinzipaufbau eines faseroptischen Temperatursensors, bei dem die Lumineszenz-Relaxationszeit durch den Einsatz der alternierenden phasenempfindlichen Polaritätswendung ohne aufwendige Maßnahmen zur Unterdrückung des Übersprechens des Anregungskanals ausgewertet wird.

Eine lichtemittierende Diode (1) (LED) wird über einen Schalter (2) periodisch mit Betriebsspannung versorgt. Die von der LED 1 emittierte Strahlung wird z.B. über eine nicht näher bezeichnete Optik in einen Lichtwellenleiter eingekoppelt, an dessen anderem Ende eine lumineszierende Substanz angebracht ist. Optik, Lichtwellenleiter und lumineszierende Substanz entsprechen z.B. der in der DE-OS 32 02 089 dargestellten Anordnung. Das von der Substanz ausgehende Lumineszenzlicht wird über den Lichtwellenleiter und einen Strahlenteiler (3) zu einem photoelektrischen Empfänger (4) z.B. einer Photodiode geleitet.

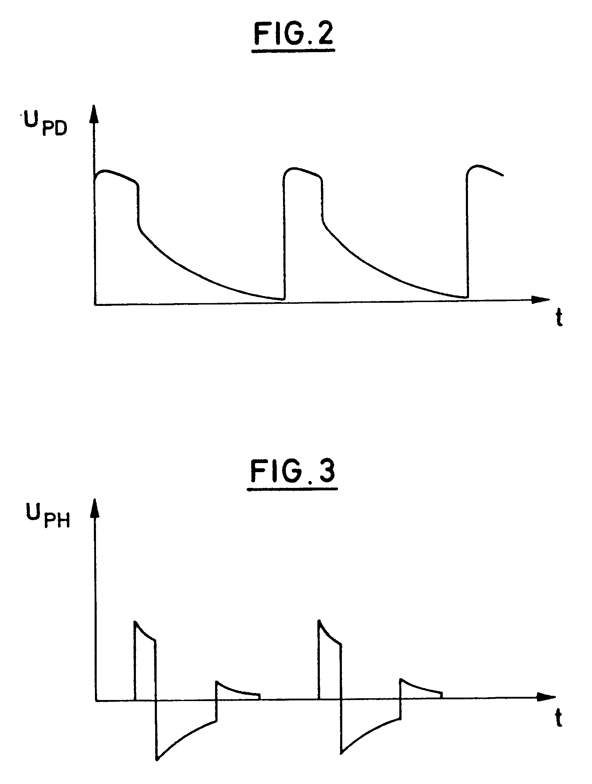

Am Ausgang des photoelektrischen Empfängers (4) tritt das in Fig. 2 dargestellte Signal $U_{PD}$ auf. Dieses Signal gelangt in eine Anordnung (5) zum phasenempfindlichen Polaritätswenden, die von einer Logikschaltung (6) gesteuert wird, die auch den vorzugsweise kontaktlosen Schalter (2) steuert. Der phasenempfindlichen Anordnung (5) ist ein Integrator (7) nachgeschaltet, an den eine Abtast- und Halteschaltung (8) angeschlossen ist, die ebenfalls durch die Logikschaltung (6) gesteuert wird. Mit der Abtast- und Halteschaltung (8) ist der Steuereingang eines spannungsgesteuerten Oszillators (VCO) (9) verbunden, dessen Ausgang an einen Eingang der Logikschaltung (6) angeschlossen ist. Durch die Logikschaltung (6) wird somit ein Regelkreis geschlossen, dessen Regelgröße die Frequenz der Schwingung der Strahlung ist, die über den VCO als Stellglied beeinflußt wird.

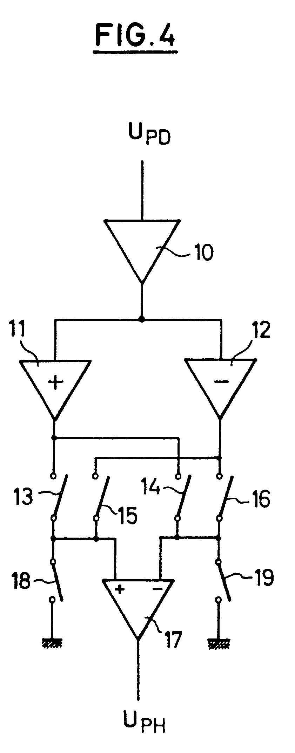

In Fig. 4 ist der prinzipielle Aufbau der Anordnung (5) zum phasenempfindlichen Polaritätswenden dargestellt. Das Ausgangssignal $U_{PD}$ des photoelektrischen Empfängers (4) ist an den Eingang eines Vorverstärkers (10) gelegt, dessen Ausgang einen nichtinvertierenden und einen invertierenden Verstärker (11) bzw. (12) speist. Der Ausgang des nicht invertierenden Verstärkers (11) ist mit zwei, vorzugsweise kontaktlosen Schaltern (13, 14) verbunden. An din Ausgang des invertierenden Verstärkers (12) sind zwei, vorzugsweise kontaktlose Schalter (15, 16) angeschlossen. Die Schalter (13, 15) sind mit dem nichtinvertierenden Eingang eines Differenzverstärkers (17) verbunden, dessen invertierender Eingang an die Schalter (14, 16) angeschlossen ist. Der nichtinvertierende und der invertierende Eingang des Differenzverstärkers (17) sind über je einen Schalter (18, 19) an Massepotential anlegbar. Bei dem Vorverstärker (10) handelt es sich um einen rauscharmen Transimpedanz-Verstärker. Am Ausgang des Differenzverstärkers (17) tritt das Signal $U_{PH}$ auf, dessen zeitlicher Verlauf in Fig. 3 dargestellt ist. Die Schalter (13) bis (16) und (18, 19) werden von der Logikschaltung (6) gesteuert. Während der Anregungsphase sind die Schalter (18, 19) geschlossen. Die Schalter (18, 19) sind während der Abklingphase offen. Die Schließzeit des Schalters (2) legt die Impulsdauer der Anregung fest.

Im Gegensatz zur phasenempfindlichen Polaritätwendung mit gleich langen direkt aufeinanderfolgenden Additions- und Subtraktionsphasen, mit der außerhalb der Anregungsphase bei streng monoton fallenden Empfangssignal $U_{PD}$ nach der Aufintegration des Ausgangssignals der phasenempfindlichen Anordnung $U_{PH}$ innerhalb des Regelkreises kein Nullabgleich möglich ist, wird dieser Nullabgleich erfindungsgemäß dadurch erreicht, daß auf eine Additions- und Subtraktionsphase unterschiedlicher Länge nochmals eine Additionsphase folgt, wobei lediglich die Gesamtdauer der beiden Additionsphasen mit der Dauer der Subtraktionsphase übereinstimmt, eine notwendige Bedingung zur Elimination von DC-Driften des Eingangssignals $U_{PD}$. Die jeweilige Dauer der Additions- und Subtraktionsphasen wird durch die Stellung der Schalter (13) bis (16) und (18, 19) bestimmt, die von einer Logik kontrolliert werden. Im Falle eines einfach exponentiell abklingenden Signals ist ein Taktverhältnis 1 : 3 : 2 geeignet. Die Erfindung ist aber nicht auf diese Signalart beschränkt, sondern ermöglicht auch die Auswertung komplexerer monoton abklingender Signale durch entsprechend anzupassende Tastverhältnisse $n_1 : n_2 : n_3$.

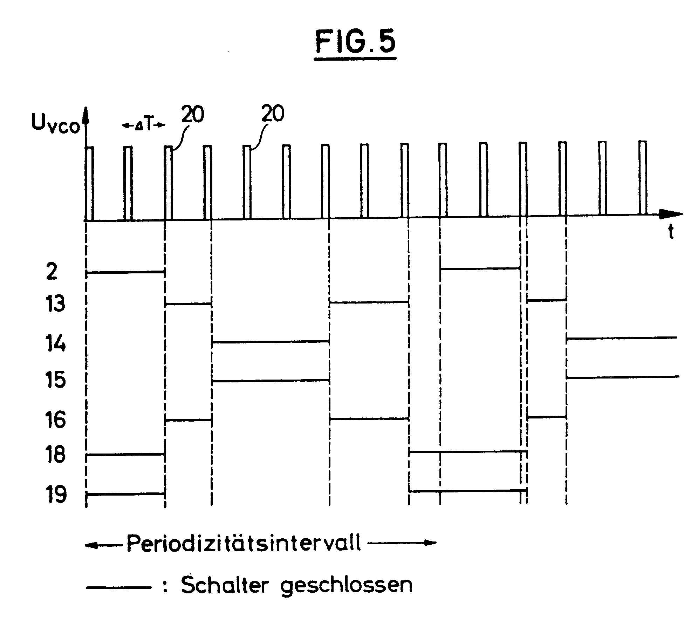

Die Fig. 5 zeigt beispielhaft für die bereits oben erwähnte Kombination $n_1 = 1$, $n_2 = 3$ und $n_3 = 2$ in einem Zeitdiagramm die Stellung der von der Logikschaltung (6) kontrollierten Schalter (13) bis (16) und (18, 19). Während der Anregungsphase (Schalter (2) geschlossen) werden die Eingänge des Differenzverstärkers (17) über die Schalter (18) und (19) auf Nullpotential gelegt. Nach der phasenempfindlichen Polaritätswendung wird das Signal $U_{PH}$ in dem Integrator (7) aufintegriert und während der Anregungsphase von der Abtast- und Halteschaltung (8) übernommen, deren Ausgangssignal den spannungsgesteuerten Oszillator (VCO) (9) steuert. Im eingeschwungenen Zustand ist die Schwingungsdauer $\Delta T$ proportional zu der Relaxationszeit $\tau$. Der Zusammenhang zwischen $\Delta T$ und $\tau$ wird durch die Taktkombination $n_1$, $n_2$ und $n_3$ bestimmt. Für das oben angegebene Beispiel $n_1 = 1$, $n_2 = 3$, $n_3 = 2$ gilt $\Delta T \approx 0,481 \cdot \tau$.

Die Impulse des spannungsgesteuerten Oszillators (9) sind in Fig. 5 mit (20) bezeichnet.

Die Schalter (13) und (16) sowie (15) und (14) sind jeweils gleichzeitig offen oder geschlossen. Nach dem

5

Öffnen der Schalter (18, 19) werden zuerst die Schalter (13, 16) für den durch $\Delta$ T bestimmten Abschnitt der Polarität geschlossen. Danach werden die Schalter (13, 16) geöffnet, während die Schalter (15, 14) für den durch $n_2 \cdot \Delta$ T bestimmten Abschnitt der Polarität geschlossen werden. Anschließend werden die Schalter (15, 14) geöffnet und die Schalter (13, 16) erneut für den durch $n_3 \cdot \Delta$ T bestimmten Abschnitt geschlossen. Danach beginnt eine Anregungsphase durch Schließen des Schalters (2).

In der Logikschaltung (6) wird vorzugsweise ein von dem VCO (9) getakteter Zähler in Verbindung mit einem Demultiplexer zur Ansteuerung der analogen CMos-Schalter einsetzen. Bei der oben angegebenen Taktkombination wird der Zähler nach jeweils acht Takten zurückgesetzt. Die Logikschaltung (8) ist zweckmäßigerweise auch mit einem µP realisierbar.

Durch die Logikschaltung (6) wird der Schwingungskreis geschlossen. Die Logikschaltung (6) untersetzt die Frequenz des beispielsweise mit einer höheren Frequenz schwingenden spannungsgesteuerten Oszillators (9) in die Frequenz der aus einer Anregungs- und einer Abklingphase bestehenden Schwingung, die für die Schließzeit und Öffnungszeit des Schalters (2) maßgebend ist. Die Schließzeiten der Schalter (13, 16) und (14, 15) legen jeweils einen Abschnitt einer Polarität fest, wobei durch die Schalter (13, 16) eine Polarität und durch die Schalter (14, 15) die andere Polarität bestimmt wird.

Das Ausgangssignal des Integrators (7) wird jeweils am Ende des in einer Abklingphase letzten phasenempfindlichen Abschnitts in die Abtast- und Halteschaltung (8) übernommen.

Die Abschnitte erstrecken sich mindestens über die Dauer einer Schwingungsdauer bzw. Schwingungsperiode $\Delta$ T. Abschnitte, die länger als die Schwingungsperiode des VCO (9) sind, erstrecken sich über Vielfache dieser Schwingungsperioden.

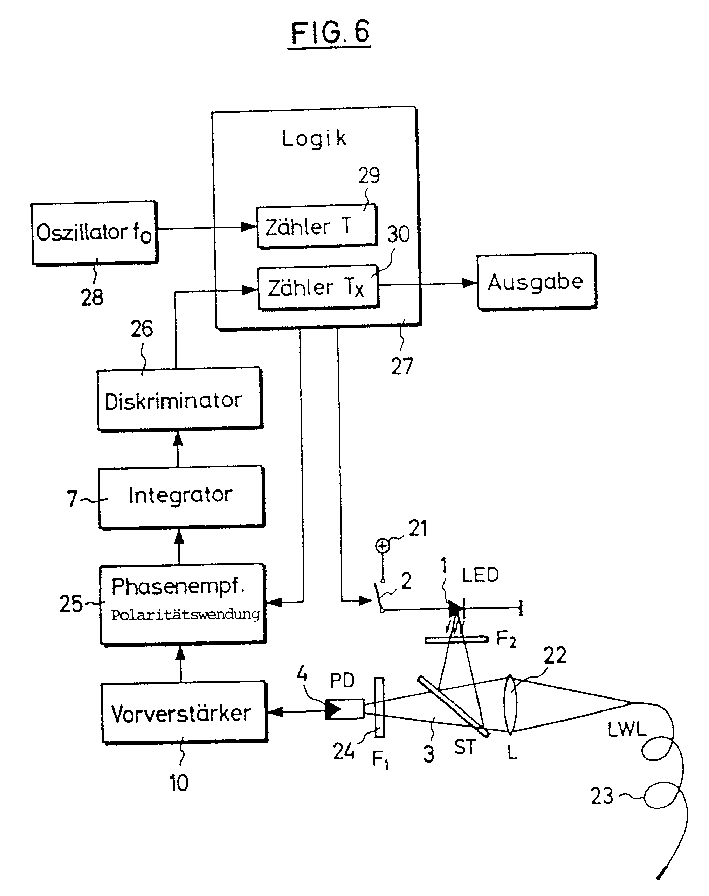

Anstelle der in Fig. 1 dargestellten Vorrichtung kann auch die in Fig. 6 gezeigte Vorrichtung verwendet werden. Bei der Vorrichtung gemäß Fig. 6 sind ebenso wie bei der Vorrichtung gemäß Fig. 1 die lichtemittierende Diode (1) und der diese steuernde Schalter (12) vorgesehen, bei dessen Betätigung die Diode (1) an Betriebsspannung, d.h. den Pol (21) einer Spannungsquelle gelegt wird. Die von der Diode (1) emittierte Strahlung wird über eine Optik (22) in einen Lichtwellenleiter (23) eingekoppelt, an dessen anderem Ende eine lumineszierende Substanz angebracht ist, die vorzugsweise aus einem Sensorkristall aus $Cr^{3+}$ : $Y_3Al_5O_{12}$ bzw. $Cr^{3+}$ : $Al_2O_3$ besteht. Es können zweckmäßigerweise Kristalle verwendet werden, die mit den isoelektrischen Störstellen $V^{2+}$, $Cr^{3+}$ oder $Mn^{4+}$ dotiert sind. Durch kombinierte Dotierung mit dreiwertigen Ionen aus der Gruppe der Seltenen Erden ist es möglich, aufgrund des Energietransfers zwischen den unterschiedlichen Seltenen-Erden-Ionen (z.B. $Nd^{3+}$ und $Yb^{3+}$) eine stark temperaturabhängige Lumineszenzabklingzeit zu erreichen, obwohl die Abklingzeit der einzelnen, isolierten Seltenen-Erden-Ionen keine ausgeprägte Temperaturabhängigkeit zeigt.

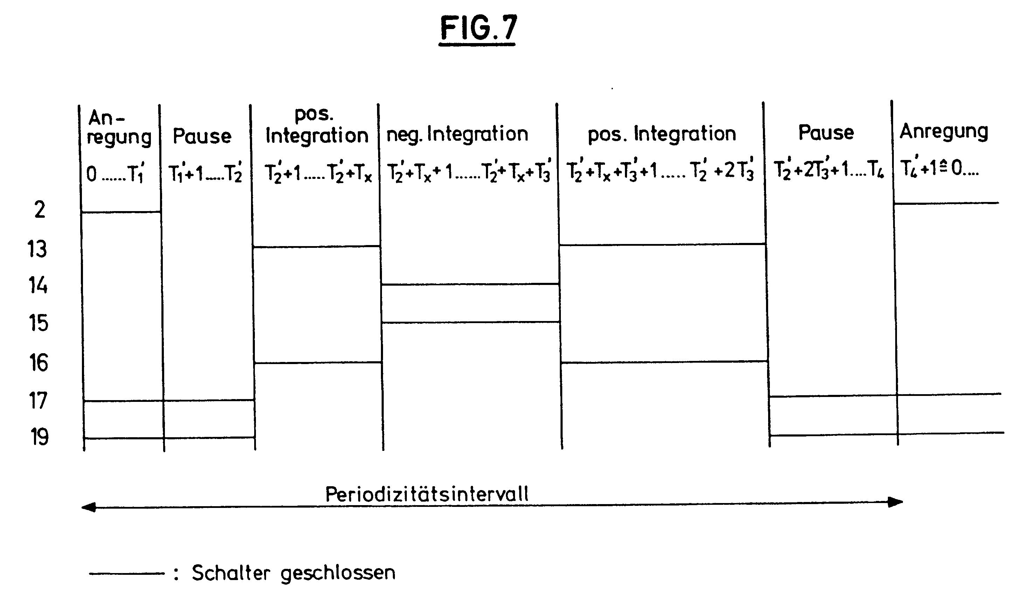

Die von der lumineszierenden Substanz ausgehende Strahlung gelangt über den Lichtwellenleiter (23), die Optik (22) und den Strahlenteiler (3) sowie über ein Filter (24) zum photoelektrischen Empfänger (4), dem der Vorverstärker (10) nach geschaltet ist. Der Vorverstärker (10) ist zweckmäßigerweise Bestandteil der Anordnung zum phasenempfindlichen Polaritätswenden, wie er in Fig. 4 dargestellt ist. In Fig. 6 ist zum besseren Verständnis nochmals schematisch eine Anordnung zum phasenempfindlichen Polaritätswenden (25) dargestellt, die dann den Vorverstärker (10) nicht aufweist. Die Anordnung (25) speist den Integrator (7), dem ein Diskriminator (26) nachgeschaltet ist, der z.B. in Abhängigkeit von der Polarität der Eingangssignale vorzeichenabhängige binäre Signale z.B. $\pm$ 1 abgibt. Mit dem Diskriminator (26) ist eine Logikschaltung (27) verbunden, die weiterhin von einem Oszillator (28) gespeist wird, der eine Taktimpulsfolge mit konstanter Frequenz $f_o$ bzw. nahezu konstanter Frequenz erzeugt. Die Taktimpulse beaufschlagen die Zähleingänge eines ersten Zählers (29) und eines zweiten Zählers (30), der an eine Ausgabeschaltung (31) angeschlossen ist, an der ein der physikalischen Größe entsprechender Wert verfügbar ist. Die Logikschaltung (27) steuert die Schalter des phasenempfindlichen Gleichrichters (25), d.h., die Schalter (13), (14), (15), (16), (18) und (19) und den Schalter (2) auf die in Fig. 7 angegebene Art. Es ist ein festes Periodizitätsintervall $T'_4$ vorhanden, nach dessen Ablauf der Zähler (29) zurückgesetzt wird. Die Anregungsphase ist mit $T'_1$ bezeichnet. Auf die Anregungsphase $T'_1$ folgt eine Pausezeit $T'_2$, in der der Schalter (2) offen ist, während die Schalter (17) und (19), ebenso wie während dir Anregungsphase, geschlossen sind. An die Pausezeit $T'_2$ schließt sich eine Integrationszeit an, in der eine positive Integration stattfindet.

Die Zeit der Anregungsphasen ist bei dem mit der Anordnung gemäß Fig. 4 ausgeübten Verfahren ebenfalls vorhanden, jedoch nicht ausdrücklich unter Hinweis auf eine Zeit benannt. Die oben erwähnte Zeit $T_1$ ist eine Pausezeit, der bei der Anordnung gemäß Fig. 6 dim Pausezeit $T_2$ entspricht. Die oben angegebene Zeit $T_2$ für die positive Integration entspricht bei der in Fig. 6 dargestellten Anordnung einer Zeit $T_2' + T_x$. Der erwähnten Zeit T für die negative Integration entspricht einer Zeit $T_2' + T_x + T_3'$. Bei dem oben beschriebenen Ausführungsbeispiel schließt sich für die positive Integration eine Zeit $T_4$ an, der gemäß der in Fig. 6 dargestellten Anordnung die Zeit $T_2' + 2T_3'$ entspricht. Die Anordnung gemäß Fig. 6 arbeitet mit der fest vorgegebenen Periodenzeit $T_4'$.

Die in Fig. 6 dargestellte Vorrichtung arbeitet wie folgt :

Die Logikschaltung steuert mit Hilfe des auf einer festen Frequenz $f_0$ schwingenden Oszillators (28) und des Zählers (29), der nach Ablauf des Periodizitätsintervalles $T_4'$ wieder zurückgesetzt wird, durch Vergleich des Zählerstandes mit fest vorgegebenen Werten $T_1'$, $T_2'$, $T_3'$ und $T_4'$ und dem variablen Wert $T_x$, der im Zähler (30) entsteht, die Stellung der Schalter der phasenempfindlichen Anordnung (25) und damit die Anregung, Pausen und Gleichrichtung (siehe Fig. 7) sowie des Schalters (2). Ein Regelkreis wird in einer sehr einfachen Form dadurch geschlossen, daß entsprechend dem Vorzeichen der Spannung am Ausgang des Integrators (7) nach abgeschlossener Integrationsphase, das an dem Diskriminator (26) bestimmt wird, der Parameter $T_x$ um den Wert 1 erhöht bzw. erniedrigt wird. Bei drei gleichrichtenden Zeitabschnitten werden die Zeitpunkte, zu denen die Umkehrungen der Polaritäten erfolgen so eingestellt, daß die Summe der Integrale null wird.

Der Inhalt des Zählers (29) wird mit Taktimpulsen der gleichbleibenden Frequenz $f_0$ erhöht. Hierbei gilt : $f_0 = \dfrac{1}{\Delta t}$. Wenn der Zählstand $n_4 = T_4'/\Delta T$ erreicht ist, was der Periodendauer $T_4'$ entspricht, wird der Zählerinhalt auf den Wert Null zurückgesetzt. Der Inhalt des Zählers (29) wird mit dem Inhalt des Zählers (30) verglichen, um die Schalter (13, 14, 15, 16, 18, 19) einzustellen. Es gelten für folgende Zählerstände $n_1$, $n_2$, $n_3$ und $n_x$ die Beziehungen $n_1 = T'/\Delta T$ ; $n_2 = T_2'/\Delta T$, $n_3 = T_3'/\Delta T$ und $n_x = T_x/\Delta T$.

Die Anregungsphase entspricht dem Zählerstand $o < n < n_1$, die Pausenseiten entsprechen dem Zählerstand $n_1 < n < n_2$ oder $n_2 + 2n_3 < n < n_4$. Die positive Integration erfolgt, solange der Zählerstand die Bedingung $n_2 < n < n_2 + n_x$ oder $n_2 + n_x + n_3 < n < n_2 + 2n_3$ erfüllt, während die negative Integration beim Zählerstand $n_2 + n_x < n < n_2 + n_x + n_3$ erfolgt.

Es wird bei der in Fig. 6 dargestellten Anordnung bei gleichbleibender Frequenz $f_0$ und damit konstanter Periode $\Delta T$ in Abhängigkeit vom Vorzeichen der Ausgangsspannung des Integrators (7) am Ende der Periode $T_4'$ jeweils der Inhalt des Zählers (30) verändert. Im einfachsten Fall wird der Zählerstand $n_x$ bei positiver Ausgangsspannung um den Wert 1 erhöht, während er bei negativer Ausgangsspannung des Integrators (71) um den Wert 1 erniedrigt wird. Es erfolgt daher eine Anpassung über die Dauer der positiven und negativen Integrationszeiten bei gleichbleibender Periode $T_4'$. Der Zählerstand, bei dem die Polarität jeweils umgekehrt wird, steht in eindeutigem Zusammenhang mit der Relaxationszeit.

Diese Regelung kann zur Verbesserung des dynamischen Verhaltens durch folgende adaptive Regelung ersetzt werden.

Ein besseres Regelverhalten wird mit der adaptiven Regelung erreicht, bei der die Anzahl S der vorangegangenen Perioden ohne Veränderung der Polarität der Integratorausgangsspannung die Veränderung $\Delta n_x$ des Zählstandes $n_x$ des Zählers (30) bestimmt. Es wird z.B. für die Anzahl von Perioden S der Zählerstand wie folgt verändert :

die Veränderung $\Delta n_x$ des Zählstandes $n_x$ des Zählers (30) bestimmt. Es wird z.B. für die Anzahl von Perioden S der Zählerstand wie folgt verändert :

$$
\begin{array}{ll}
S = 1 & \Delta n_x = \pm 1 \\
S = 2 & \Delta n_x = \pm 2 \\
S = 3 & \Delta n_x = \pm 5 \\
S = 4 & \Delta n_x = \pm 10
\end{array}
$$

Der sich so ergebende Zählerstandparameter $T_x$ ist eine eindeutige Funktion der Relaxationszeit und kann bei bekanntem Zusammenhang zwischen der Abklingzeit und dem zu messenden physikalischen Parameter leicht umgerechnet werden.

Die Werte für die Taktfrequenz $f_0$ und die Parameter $T_1'$ $T_2'$ $T_3'$ und $T_4'$ hängen von der Abklingzeit und der geforderten Auflösung ab (siehe Beispiel).

Die Pausen dienen zur Unterdrückung von Meßfehlern aufgrund der endlichen Anstiegszeit des Vorverstärkers.

Die Logikschaltung (27) kann mit diskreten Komponenten, z.B Zählern, Komparatoren und Logikgattern, aber auch mit Hilfe eines Mikroprozessors realisiert werden.

Nachstehend werden in einem Beispiel bevorzugte Werte angegeben :

Relaxationszeit : $\tau$ 200 μs... 2ms
Taktfrequenz : $f_0 = 10$ MHz
Taktperiode : $\Delta T$, des Oszillators 28 $= 0{,}1$ μs
Anregungsphase : 1 ms ; $n_1 = 10\,000$
Pausenzeit : 50 μs ; $n_2 = 10\,500$
Integrationszeit : 1 ms ; $n_3' = 10\,000$

$$n_4 = 31\,000$$

Auflösung bei $\tau = 200\ \mu s$

$$n_x = \pm\ 1 \qquad \triangleq \qquad \frac{\Delta\tau}{\tau} = \pm\ 8 \cdot 10^{-4}$$

Auflösung bei $\tau = 2ms$

$$n_x = \pm\ 1 \qquad \triangleq \qquad \frac{\Delta\tau}{\tau} = \pm\ 18 \cdot 10^{-4}.$$

Die oben erläuterten Verfahren arbeiten unabhängig von der Gleichspannung am Ausgang des Vorverstärkers (10), d.h. es kann eine Wechselspannungsankopplung verwendet werden, bei der die Fehler der Gleichspannungsankopplung vermieden werden.

Bei einfach exponentiell abklingenden Signalen können Laufzeiteffekte bei unterschiedlich langen Lichtwellenleiterstrecken die Messung und damit die Auswertung nicht beeinflussen (z.B. gilt : 1 km Lichtwellenleiter = 10 $\mu s$ Verzögerung).

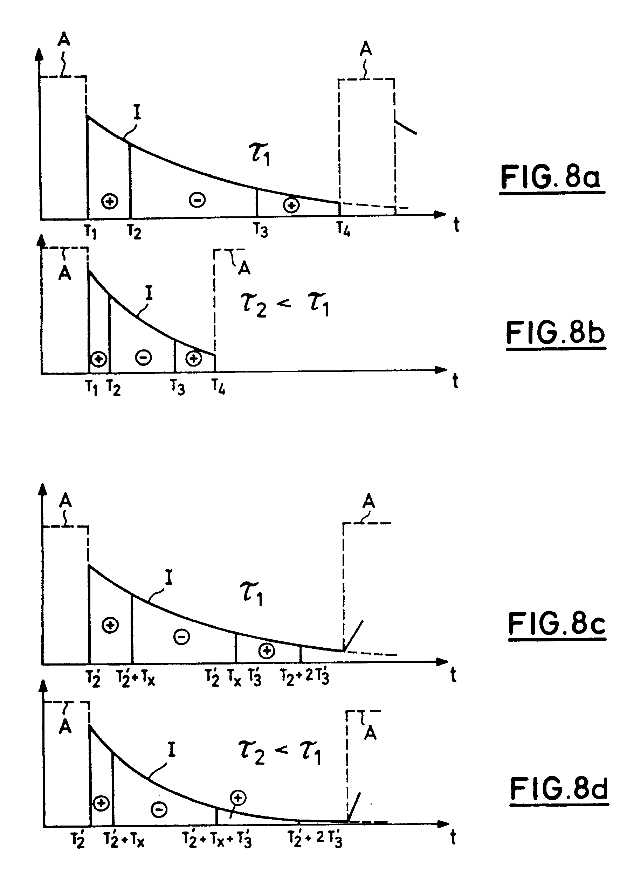

Die Fig. 8a zeigt in Ordinatenrichtung Anregungsimpulse (gestrichelt) und das Integratorausgangssignal I in Abhängigkeit von der Zeit t, die in Abszissenrichtung dargestellt ist, für eine erste Lumineszenz-Relaxationszeit $\tau_1$. In Fig. 8b ist die Integratorausgangsspannung I in Ordinatenrichtung als Funktion der Zeit t in Abszissenrichtung für die Lumineszenz-Relaxationszeit $\tau_2 < \tau_1$ gezeigt. Die Zeiten $T_1$, $T_2$, $T_3$ und $T_4$ sind in beiden Figuren dargestellt, wobei jeweils die positive Integration durch ein $+$ und die negative Integration durch ein $-$ bezeichnet sind. Es ist ersichtlich, daß die Dauer $T_1$ bis $T_4$ bei $\tau_2 < \tau_1$ ebenfalls kleiner ist. In gleicher Weise sind in Fig. 8c und d jeweils die Integratorausgangssignale I in Ordinatenrichtung und die Zeit t in Abszissenrichtung für die beiden Lumineszenz-Relaxationszeiten $\tau_1$ und $\tau_2$ dargestellt, wobei die Zeiten $T_2'$, $T_3'$ und $T_x$ in Abszissenrichtung unter bezug auf die Polarität der Integration eingetragen sind. Aus Fig. 8c und 8d ist zu ersehen, daß bei gleichbleibenden $T_2' + 2T_3'$ sich die Verhältnisse der positiven und negativen Integrationszeiten ändern.

Bei der in Fig. 6 gezeigten Anordnung wird somit als Regelgröße die relative Dauer mindestens zweier Abschnitte mit verschiedenen Polaritäten so beeinflußt, daß am Ende der Periode einer Schwingung das Ergebnis der Integration möglichst klein z.B. null wird.

Es können auch alle drei Abschnitte verändert werden.

Z.B. : positive Polarität bei $n_2 < n < n_2 + n_x$ oder

$n_2 + 4n_x < n < n_2 + 6n_x$,

negative Polarität bei $n_2 + n_x < n < n_2 + 4n_x$

Pause bei $n_2 + 6n_x < n < n_4$.

## Ansprüche

1. Verfahren zur Messung der Fluoreszenz-Abklingdauer der Strahlung einer fluoreszierenden Substanz, deren Fluoreszenz-Abklingdauer von mindestens einer physikalischen Größe abhängt, indem die Substanz einer mit einer elektrischen Schwingung erzeugten Strahlung ausgesetzt wird, die eine Fluoreszenzstrahlung hervorruft, die einem photoelektrischen Empfänger zugeführt wird, aus dessen Ausgangssignal positive und negative Abschnitte gegenüber einem Bezugspotential phasenempfindlich ausgewählt und integriert werden, wobei das Integral der Abschnitte in einem Regelkreis die Regelgröße, die ein Maß für die physikalische Größe ist, im Sinne einer Reduzierung seines Werts auf null oder nahezu null beeinflußt, **dadurch gekennzeichnet,** daß aus dem durch die Fluoreszenzstrahlung nur in deren Abklingphase erhaltenen Ausgangssignal des Empfängers durch phasenempfindliche alternierende Polaritätswendung die positiven und negativen Abschnitte erzeugt werden, daß die Abschnitte der verschiedenen Polaritäten unterschiedlich lang sind, daß die Gesamtzeiten der Abschnitte der verschiedenen Polaritäten gleich sind und daß die Regelgröße die Frequenz der Schwingung oder die relative Dauer mindestens zweier Abschnitte der verschiedenen Polaritäten bei gleichbleibender oder nahezu gleichbleibender Frequenz ist.

2. Verfahren nach Anspruch 1, **dadurch gekennzeichnet**, daß bei jeder Abklingphase zwei Abschnitte der einen Polarität beiderseits eines Abschnitts der anderen Polarität vorgesehen sind.

3. Verfahren nach Anspruch 1 oder 2, **dadurch gekennzeichnet**, daß innerhalb einer Periode der Schwingung nach einer Anregungsphase und nach den Abschnitten der Polaritätswendung jeweils eine Pausenzeit ohne Polaritätswendung eingefügt ist.

4. Verfahren nach einem der vorhergehenden Ansprüche, **dadurch gekennzeichnet**, daß Taktimpulse von gleichbleibender oder nahezu gleichbleibender Frequenz während einer Periode der Schwingung gezählt und mit vorgegebenen Werten für die Anregungsphase und die Abschnitte der Polaritätswendung zur Erzeugung von Steuersignalen verglichen werden, wobei die Zeitdauern der Abschnitte der Polaritätswendung in Abhängigkeit vom positiven oder negativen Ergebnis der Integration verkleinert oder vergrößert und ausgegeben werden.

5. Verfahren nach Anspruch 4, **dadurch gekennzeichnet**, daß die Dauer der Abschnitte der Polaritätswendung in Abhängigkeit von der zahl der vorausgegangenen Perioden der Schwingung verändert wird.

6. Vorrichtung zur Messung der Fluoreszenz-Abklingdauer der Strahlung einer fluoreszierenden Substanz, deren Fluoreszenz-Abklingdauer von mindestens einer physikalischen Größe abhängt, indem die Substanz einer mit einer elektrischen Schwingung erzeugten Strahlung ausgesetzt wird, die eine Fluoreszenzstrahlung hervorruft, die einem photoelektrischen Empfänger (4) zugeführt wird, aus dessen Ausgangssignal positive und negative Abschnitte gegenüber einem Bezugspotential phasenempfindlich ausgewählt und integriert werden, wobei das Integral der Abschnitte in einem Regelkreis die Regelgröße, die ein Maß für die physikalische Größe ist, im Sinne einer Reduzierung seines Werts auf null oder nahezu null beeinflußt, zur Durchführung des Verfahrens nach einem der vorhergehenden Ansprüche, **dadurch gekennzeichnet**, daß die Ausgangssignale des photoelektrischen Empfängers (4) invertiert und nichtinvertiert jeweils über zwei Schalter (13, 14 ; 15, 16) abwechselnd an den invertierenden oder nichtinvertierenden Eingang eines Differenzverstärkers (17) anlegbar sind, dessen beide Eingänge während der Anregungsphasen an gleiches Bezugspotential gelegt sind und dessen Ausgang mit einem Integrator (7) verbunden ist, und daß dem Integrator (7) eine von einer Logikschaltung (6) für die Schalterbetätigung steuerbare Abtast- und Halteschaltung (8) nachgeschaltet ist, an die der Steuereingang eines spannungsgesteuerten Oszillators (9) für die Erzeugung der elektrischen Schwingung angeschlossen ist, oder daß dem Integrator (7) ein Diskriminator (26) nachgeschaltet ist, an den eine Logikschaltung (27) angeschlossen ist, die einen Zähler (30) enthält, dessen Zähleingang mit Taktimpulsen gleichbleibender Frequenz beaufschlagbar ist und dessen Inhalt zur Erzeugung von Steuersignalen für die Schalter (2, 13, 14; 15, 16 ; 18, 19) mit vorgebbaren Werten vergleichbar ist.

7. Vorrichtung nach Anspruch 6, **dadurch gekennzeichnet**, daß die Abschnitte der Polaritätswendung jeweils gleich der Schwingungsperiode ($\Delta$ T) oder ein Mehrfaches der Schwingungsperiode ($\Delta$ T) der Schwingung des spannungsgesteuerten Oszillators (9) sind.

8. Vorrichtung nach Anspruch 6 oder 7, **dadurch gekennzeichnet**, daß an den photoelektrischen Empfänger (4) ein Vorverstärker (10) angeschlossen ist, der einen nichtinvertierenden Verstärker (11) und einen invertierenden Verstärker (12) speist, daß die beiden Schalter (13, 14 ; 15, 16) je dem nichtinvertierenden und dem invertierenden Verstärker (15, 16) nachgeschaltet ist, von denen jeweils der eine an den nichtinvertierenden und der andere an den invertierenden Eingang des Differenzverstärkers (17) angeschlossen ist, dessen Eingänge über jeweils einen weiteren Schalter (18, 19) an Massepotential anlegbar ist.

9. Fluoreszierende Substanz zur Temperaturmessung zur Verwendung bei einem Verfahren oder in einer Vorrichtung nach zumindest einem der vorhergehenden Ansprüche, **dadurch gekennzeichnet**, daß als Substanz ein Kristall vorgesehen ist, der mit den isoelektronischen Störstellen $V^{2+}$, $Cr^{3+}$ oder $Mn^{4+}$ dotiert ist.

10. Fluoreszierende Substanz nach Anspruch 9, **dadurch gekennzeichnet**, daß der Kristall aus $Cr^{3+}$ : $Y_3Al_5O_{12}$ oder $Cr^{3+}$ : $Al_2O_3$ besteht.

11. Fluoreszierende Substanz nach Anspruch 9 oder 10, **dadurch gekennzeichnet**, daß der Querschnitt des Kristalls dem des Lichtwellenleiters angepaßt ist, der die Fluoreszenz des Kristalls anregt und daß der Kristall vorzugsweise eine Quader- oder Zylinderform aufweist.

## Claims

1. A method for measuring the fluorescence relaxation period of the radiation of a fluorescent substance of which the fluorescence relaxation period is dependent on at least one physical parameter, in which the sub-

9

stance is exposed to radiation which is produced by an electrical oscillation and which generates a fluorescent radiation which is fed to a photoelectric receiver from the output signal of which positive and negative sections in relation to a reference potential are phase-sensitively selected and integrated, the integral of the sections influencing the controlled variable – which is a measure of the physical parameter – in a control circuit by reducing its value to zero or substantially zero, characterized in that the positive and negative sections are produced from the output signal of the receiver obtained from the fluorescent radiation only during the relaxation phase by phase-sensitive alternating polarity reversal, in that the sections of the different polarities are of different length, in that the total durations of the sections of the different polarities are equal and in that the controlled variable is the frequency of oscillation or the relative duration of at least two sections of the different polarities for constant or substantially constant frequency.

2. A method as claimed in claim 1, characterized in that, during each relaxation phase, two sections of one polarity are provided on both sides of one section of the other polarity.

3. A method as claimed in claim 1 or 2, characterized in that an interval with no polarity reversal is inserted between an oscillation period after an excitation phase and after the sections of the polarity reversal.

4. A method as claimed in any of the preceding claims, characterized in that clock pulses of constant or substantially constant frequency are counted during an oscillation period and compared with predetermined values for the excitation phase and the sections of polarity reversal to generate control signals, the durations of the polarity reversal sections being reduced or increased according to whether the result of integration is positive or negative and being transmitted as output signals.

5. A process as claimed in claim 4, characterized in that the duration of the polarity reversal sections is varied according to the number of preceding oscillation periods.

6. An apparatus for measuring the fluorescence relaxation period of the radiation of a fluorescent substance of which the fluorescence relaxation period is dependent on at least one physical parameter, in which the substance is exposed to radiation which is produced by an electrical oscillation and which generates a fluorescent radiation which is fed to a photoelectric receiver (4) from the output signal of which positive and negative sections in relation to a reference potential are phase-sensitively selected and integrated, the integral of the sections influencing the controlled variable – which is a measure of the physical parameter – in a control circuit by reducing its value to zero or substantially zero for carrying out the method claimed in any of the preceding claims, characterized in that in that the output signals of the photoelectric receiver (4), inverted or non-inverted, are designed for alternate application via two switches (13, 14 ; 15, 16) to the inverting or non-inverting input of a differential amplifier (17) of which the two inputs are applied to the same reference potential during the excitation phases and of which the output is connected to an integrator (7) and in that the integrator (7) is followed by a scan and hold circuit (8) which is controllable by a logic circuit (6) for operating the switches and to which the control input of a voltage-controlled oscillator (9) for generating the electrical oscillation is connected or in that the integrator (7) is followed by a discriminator (26) to which is connected a logic circuit (27) containing a counter (30) of which the counting input is designed to receive clock pulses of constant frequency and of which the content is designed for comparison with presettable values to generate control signals for the switches (2, 13, 14 ; 15, 16 ; 18, 19).

7. An apparatus as claimed in claim 6, characterized in that the polarity reversal sections are equal to the oscillation period ($\Delta T$) or are several times the oscillation period ($\Delta T$) of the oscillation of the voltage-controlled oscillator (9).

8. An apparatus as claimed in claim 6 or 7, characterized in that a preamplifier (10) is connected to the photoelectric receiver (4) and feeds a non-inverting amplifier (11) and an inverting amplifier (12), in that the two switches (13, 14 ; 15, 16) respectively follow the non-inverting amplifier (11) and the inverting amplifier (12) of which one is connected to the non-inverting input and the other to the inverting input of the differential amplifier (17) of which the inputs are each designed for application to earth potential through another switch (18, 19).

9. A fluorescent substance for temperature measurement for use in a method or in an apparatus according to at least one of the preceding claims, characterized in that the substance is a crystal which is doped with the isoelectronic defects $V^{2+}$, $Cr^{3+}$ or $Mn^{4+}$.

10. A fluorescent substance as claimed in claim 9, characterized in that the crystal consists of $Cr^{3+}$ : $Y_3Al_5O_{12}$ or $Cr^{3+}$ : $Al_2O_3$.

11. A fluorescent substance as claimed in claim 9 or 10, characterized in that the cross-section of the crystal is adapted to that of the light wave guide which excites the fluorescence of the crystal and in that the crystal is preferably square or cylindrical in shape.

## Revendications

1. Procédé pour mesurer la durée de désactivation de la fluorescence d'un rayonnement d'une substance fluorescente, dont la durée de désactivation dépend au moins d'une grandeur physique, en exposant la substance à un rayonnement produit par une vibration électrique, qui engendre un rayonnement de fluorescence, appliqué à un récepteur photo-électrique, et dans son signal de sortie on choisit de façon sensible à la phase des segments positifs et négatifs vis-à-vis d'un potentiel de référence et on les intègre, l'intégrale des segments influençant dans un circuit de réglage la grandeur réglée qui est une mesure pour la grandeur physique, dans le sens d'une réduction de sa valeur à zéro ou presque zéro, caractérisé :

– en ce que les segments positifs et négatifs sont créés à partir du signal de sortie du récepteur obtenu par le rayonnement de fluorescence seulement dans sa phase de décroissance par suite d'une inversion de polarité alternante sensible à la phase,
– en ce que les segments de polarité différente sont de longueur différente,
– en ce que l'ensemble des temps des segments de polarités différentes sont égaux et,
– en ce que la grandeur de réglage est la fréquence de la vibration ou la durée relative d'au moins deux segments de polarité différente à fréquence constante ou à peu près constante.

2. Procédé selon la revendication 1, caractérisé en ce que pour chaque phase de décroissance sont prévus deux segments d'une des polarités des deux côtés d'un segment de l'autre polarité

3. Procédé selon les revendications 1 et 2, caractérisé en ce qu'à l'intérieur d'une période de la vibration après une période d'excitation et après les segments de l'inversion de polarité, est interposé respectivement un temps de pause sans inversion de polarité.

4. Procédé selon l'une des revendications précédentes, caractérisé en ce que les impulsions de synchronisation de fréquence constante ou à peu près constante sont comptées pendant une période de la vibration et comparées pour l'obtention de signaux de commande avec des valeurs données pour la phase d'excitation et les segments de changement de polarité, les durées des segments d'inversion de polarité étant réduites ou augmentées et émises en fonction du résultat positif ou négatif de l'intégration.

5. Procédé selon la revendication 4, caractérisé en ce que la durée des segments d'inversion de polarité est modifiée en fonction du nombre des périodes précédentes de la vibration.

6. Dispositif pour mesurer la durée de décroissance de la fluorescence de rayonnement d'une substance fluorescente, dont la durée d'évanouissement de fluorescence dépend d'au moins une grandeur physique, en exposant la substance à un rayonnement produit par une vibration électrique qui engendre un rayonnement de fluorescence, appliqué à un récepteur photo-électrique (4), et dans son signal de sortie duquel on choisit de façon sensible des segments positifs et négatifs vis-à-vis d'un potentiel de référence et on les intègré, l'intégrale des segments influence dans un circuit de réglage, la grandeur réglée, qui est une mesure pour la grandeur physique, dans le sens d'une réduction de sa valeur à zéro ou presque zéro, dispositif destiné à l'exécution du procédé selon l'une des revendications précédentes, caractérisé :

– en ce que les signaux de sortie du récepteur photo-électrique (4) alternativement inversés et non inversés respectivement à l'aide de deux commutateurs (13, 14, 15, 16) sont appliqués à l'entrée qui inverse ou non d'un amplificateur différentiateur (17), dont les deux entrées pendant les phases d'excitation sont placées au même potentiel de référence et dont la sortie est reliée à un intégrateur (7) et,
– en ce que l'intégrateur (7) est branché à un circuit d'analyse et d'arrêt (8) commandé par un circuit logique (6) pour la manoeuvre de commutation, circuit (8) auquel est reliée l'entrée de commande d'un oscillateur (9) commandé par tension pour la réalisation de l'oscillation électrique, ou
– en ce qu'à l'intégrateur (7) est branché en aval un discriminateur (26), auquel est relié un circuit logique (27) avec un compteur (30) dont l'entrée de comptage peut être alimentée par des impulsions de synchronisation de fréquence constante et dont le contenu est comparable aux valeurs prédéterminées par rapport à la production de signaux de commande pour les commutateurs (2, 13, 14 ; 15, 16 ; 18, 19).

7. Dispositif selon la revendication 6, caractérisé en ce que les segments du changement de polarité sont respectivement égaux à la période d'oscillation (Δ T) ou un multiple de la période d'oscillation (Δ T) de l'oscillation de l'oscillateur (9) commandé par tension.

8. Dispositif selon les revendications 6 et 7, caractérisé en ce qu'au récepteur (4) photo-électrique est relié un préamplificateur (10) qui alimente un amplificateur non inverseur (11) et un amplificateur inverseur (12),
– les deux commutateurs (13, 14 ; 15, 16) sont reliés à la suite respectivement à l'amplificateur non inverseur et à l'amplificateur inverseur (11, 12), d'où respectivement l'un est relié à l'entrée non inversée et l'autre à l'entrée inversée de l'amplificateur différentiel (17), dont les entrées sont mises à la masse respectivement par un autre commutateur (18, 19).

9. Substance fluorescente pour mesure de la température dans l'utilisation d'un procédé ou dans un dispositif selon au moins l'une des revendications précédentes, caractérisée en ce que comme substance est prévu un cristal, qui est doté des imperfections isoélectroniques $V^{2+}$, $Cr^{3+}$ ou $Mn^{4+}$.

10. Substance fluorescente selon la revendication 9, caractérisée en ce que le cristal est composé de $Cr^3$

$^+$ : $Y_3Al_5O_{12}$ ou $Cr^{3+}$ : $Al_2O_3$.

11. Substance fluorescente selon les revendications 9 ou 10 caractérisée :

– en ce que la section transversale du cristal est adaptée à celle de la fibre optique qui excite la fluorescence du cristal et,

– en ce que le cristal, de préférence comporte une forme parallélépipédique ou cylindrique.

# FIG.1

$U_{PD}$

PH — 5

$U_{PH}$ (FIG. 3)

$\int$ — 7

S + H — 8

$U_{VCO}$   VCO

9

Ausgang

FOS

Logik — 6

13

## FIG.2

$U_{PD}$

t

## FIG.3

$U_{PH}$

t

# FIG.4

# FIG.5

# FIG.6

# FIG.7

| An-regung | Pause | pos. Integration | neg. Integration | pos. Integration | Pause | Anregung |
|---|---|---|---|---|---|---|
| $0 \ldots T_1'$ | $T_1'+1 \ldots T_2'$ | $T_2'+1 \ldots T_2'+T_x$ | $T_2'+T_x+1 \ldots T_2'+T_x+T_3'$ | $T_2'+T_x+T_3'+1 \ldots T_2'+2T_3'$ | $T_2'+2T_3'+1 \ldots T_4$ | $T_4'+1 \triangleq 0 \ldots$ |

Periodizitätsintervall

———— : Schalter geschlossen

EP 0 238 856 B1

FIG. 8a

FIG. 8b

FIG. 8c

FIG. 8d